# EUROPÄISCHE PATENTSCHRIFT

(11) **EP 2 758 323 B1**
(45) Veröffentlichungstag und Bekanntmachung des Hinweises auf die Patenterteilung: **14.09.2016**
(21) Anmeldenummer: 12748158.8
(22) Anmeldetag: 10.07.2012
(51) Int. Cl.: B65G 1/04, B66F 9/075, G05D 3/20, H02P 23/00

(54) **VERFAHREN ZUR POSITIONIERUNG EINES SCHIENENGEFÜHRTEN MOBILTEILS UND VORRICHTUNG WORIN DAS VERFAHREN DURCHGEFÜHRT WIRD**
METHOD FOR POSITIONING A RAIL-GUIDED MOBILE PART AND DEVICE WHEREIN THE METHOD IS EXECUTED
PROCEDE DE POSITIONNEMENT D'UN ÉLÉMENT MOBILE GUIDÉ SUR RAILS ET DISPOSITIF DANS LEQUEL CE PROCEDE EST MIS EN OEUVRE.

(30) Priorität: 22.09.2011 DE 102011113877
(43) Veröffentlichungstag der Anmeldung: 30.07.2014
(73) Patentinhaber: Sew-Eurodrive GmbH & Co. KG, 76646 Bruchsal (DE)
(72) Erfinder: REINACHER, Nico, 76706 Dettenheim (DE); BRECHT, Roland, 76307 Karlsbad (DE)
(86) Internationale Anmeldenummer: PCT/EP2012/002898
(87) Internationale Veröffentlichungsnummer: WO 2013/041163

(56) Entgegenhaltungen:
- US-A- 3 883 008
- US-A- 5 091 685
- US-A- 5 798 920

## Beschreibung

Die Erfindung betrifft ein Verfahren zur Positionierung eines schienengeführten Mobilteils, insbesondere Fahrzeugs, und eine Vorrichtung zur Durchführung des Verfahrens.

Es ist allgemein bekannt, dem Ausgangssignal eines Reglerglieds ein Vorsteuersignal zuzuführen. Somit ist verschwindender Differenz zwischen Sollwert und Istwert nur der Vorsteuerwert wichtig.

**Aus der** US 5 798 920 A **ist als gattungsbildender Stand der Technik ein Verfahren zur Positionierung eines Mobilteils bekannt.**

Der Erfindung liegt daher die Aufgabe zugrunde, ein Verfahren zur Positionierung eines schienengeführten Mobilteils, insbesondere Fahrzeugs, weiterzubilden.

Erfindungsgemäß wird die Aufgabe bei dem Verfahren zur Positionierung eines schienengeführten Mobilteils, insbesondere Fahrzeugs, nach den in Anspruch 1 **und bei der Vorrichtung nach den in Anspruch 15** angegebenen Merkmalen gelöst.

Wichtige Merkmale der Erfindung bei dem Verfahren zur Positionierung eines schienengeführten Mobilteils, insbesondere Fahrzeugs, sind, dass das Mobilteil eine von einem drehzahlgeregelten Antrieb direkt oder über ein Getriebe angetriebene Polradscheibe aufweist,
wobei die Polradscheibe in Umfangsrichtung abwechselnd magnetisierte Dauermagnete aufweist, wobei die Polradscheibe an einem sich in Schienenrichtung erstreckenden Reaktionsteil Wirbelströme erzeugt zur Erzeugung von Antriebskraft in Schienenrichtung für das Mobilteil,
**wobei** die Masse des Mobilteils geschätzt oder bestimmt wird, insbesondere aus einem Abschnitt des zeitlichen Verlaufs der Beschleunigung des Mobilteils in Schienenrichtung, wobei vor Beginn des Positionierungsablaufes von einem Profilgenerator ein Sollbeschleunigungsverlauf bestimmt wird,
wobei ein Vorsteuersignal als Funktion des Sollbeschleunigungsverlaufs und der Masse bestimmt wird, und
wobei das Vorsteuersignal über einen Vorsteuerzweig einem Stellwertesignal eines ersten Reglerglieds aufsummiert wird, so dass eine Solldrehzahl dem Antriebsregler bereitgestellt wird.

Von Vorteil ist dabei, dass die Regeldynamik verbessert ist, da die Masse berücksichtigt wird. Hierzu wird aus den erfassten Werten, beispielsw**eise einem erfassten Geschwindigkeitsverlauf oder aus einem zeitlich abgeleiteten, erfassten Positionsverlauf und dem erfassten Motorstrom beziehungsweise dem aus dem erfassten Motorstrom und/oder der Motorspannung das Motordrehmoment geschätzt unter Berücksichtigung von Maschinenparametern und die Masse bestimmt..** Wenn also das Mobilteil ein Transportgut aufnimmt und hiermit bewegt wird, ist die massenabhängige Veränderung des Verlaufs verwendbar zur Abschätzung der gesamten Masse des Mobilteils.

Bei einer vorteilhaften Ausgestaltung wird dem Reglerglied die Differenz aus einer Sollgeschwindigkeit und einer Ist-Geschwindigkeit in Schienenrichtung des Mobilteils zugeführt. Von Vorteil ist dabei, dass das Vorsteuersignal einem Geschwindigkeitsregler zugeführt wird. Denn auf diese Weise ist das mit der Masse gewichtete Beschleunigungs-Vorsteuersignal direkt auf das Ausgangssignal eines Geschwindigkeitsreglers aufsummierbar. Die Regelgüte wird somit verbessert und die Schwingneigung vermindert oder sogar ganz unterdrückt.

Bei einer vorteilhaften Ausgestaltung wird zusätzlich zum Vorsteuersignal dem Stellwertsignal auch ein Ausgangssignal eines Kompensationsmittels zugeführt. Von Vorteil ist dabei, dass mittels des Signals des Kompensationsmittels Reibungsverhältnisse berücksichtigbar sind. Hierbei ist Gleitreibung, Rollreibung, Luftwiderstand und/oder Haftreibung berücksichtigbar. Insbesondere entspricht der Gleitreibung ein konstanter Wert, der Rollreibung und dem Luftwiderstand ein geschwindigkeitsabhängiger Wert.

Bei einer vorteilhaften Ausgestaltung ist die Funktion ein Produkt aus einem der bestimmten Masse entsprechenden Wert und dem jeweiligen Sollbeschleunigungswertes, insbesondere wobei der Wert mit einem Gewichtungsfaktor multipliziert wird. Von Vorteil ist dabei, dass die Masse in einfacher Weise berücksichtigbar ist.

Bei einer vorteilhaften Ausgestaltung wird die Masse bestimmt aus dem zeitlichen Verlauf der Geschwindigkeit des Mobilteils und dem zeitlichen Verlauf des Wertes einer für die Antriebskraft repräsentativen physikalischen Größe.

Vorzugsweise wird die Reibung mitberücksichtigt, insbesondere indem ein konstanter Betrag und/oder ein geschwindigkeitsabhängiger Betrag, vom Wert der physikalischen Größe subtrahiert wird und das Ergebnis zur Massenbestimmung verwendet wird,
indem aus dem aktuellen Geschwindigkeitsverlauf die Beschleunigung bestimmt wird und als Masse das Verhältnis aus dem Wert der physikalischen Größe, insbesondere also Kraft und/oder Motorstrom, und der Beschleunigung gebildet wird. Von Vorteil ist dabei, dass die Masse in einfacher Weise bestimmbar und berücksichtigbar ist.

Bei einer vorteilhaften Ausgestaltung wird von dem Profilgenerator ein Sollpositionsverlauf und/oder ein Sollgeschwindigkeitsverlauf bestimmt, insbesondere vor Beginn des Positionierungsablaufes, wobei der Sollpositionsverlauf von einer Anfangsposition zu einer Zielposition verläuft und der Verlauf der Geschwindigkeit von einer Anfangsgeschwindigkeit bei der Anfangsposition zu einer Zielgeschwindigkeit bei der Zielposition sowie der Verlauf der Beschleunigung von einer Anfangsbeschleunigung bei der Anfangsposition zu einer Zielbeschleunigung bei der Zielposition.

Von Vorteil ist dabei, dass der Profilgenerator Sollwerteverläufe der Größen, insbesondere Position, Geschwindigkeit und Beschleunigung, in der an Randbedingungen und Optimierungbedingungen, wie beispielsweise maximaler Ruck, also Maximalwert für die zeitliche Ableitung der Beschleunigung, berücksichtigt.

Vorzugsweise sind hierbei Zielgeschwindigkeit und Zielbeschleunigung Null.

Bei einer vorteilhaften Ausgestaltung wird der vom Profilgenerator erzeugte Geschwindigkeitsverlauf als Vorsteuersignal verwendet.

Vorzugsweise wird das Vorsteuersignal dem Ausgangssignal eines weiteren Reglerglieds aufsummiert, an dessen Eingang die Differenz aus Sollposition und bestimmter Istposition zugeführt wird. Von Vorteil ist dabei, dass bei dem kaskadierten Regler auch dem Ausgangssignal des Positionsreglers ein Vorsteuersignal aufsummierbar ist, das schon dem gewünschten optimierten Geschwindigkeitsverlauf entspricht.

Bei einer vorteilhaften Ausgestaltung wird die Differenz aus Sollgeschwindigkeit, also aus der Summe aus dem Ausgangssignal und dem zugehörigen Vorsteuersignal des weiteren Reglerglieds, und der erfassten, gefilterten, Ist-Geschwindigkeit dem ersten Reglerglied zugeführt.

Vorzugsweise wird dem Ausgangssignal des ersten Reglerglieds nicht nur das zugehörige Vorsteuersignal mit Berücksichtigung der Masse aufsummiert sondern auch ein Wert zur Berücksichtigung der Reibung und ein Wert zur Berücksichtigung eines das Polrad antreibenden Getriebes und/oder mit Berücksichtigung des effektiv wirksamen Radius der Polradscheibe. Von Vorteil ist dabei, dass die Regelgüte verbessert ist.

Bei einer vorteilhaften Ausgestaltung wird das Reglerglied jeweils als lineares Reglerglied, insbesondere P-Reglerglied, PI-Reglerglied oder PID-Reglerglieds, ausgeführt.

Vorzugsweise ist am Reglerglied ausgangsseitig ein Begrenzerglied vorgesehen Von Vorteil ist dabei, dass ein besonders einfaches Reglerglied verwendbar ist.

Wichtige Merkmale bei der Vorrichtung worin das Verfahren durchgeführt wird, sind, dass die Vorrichtung einen Sensor zur Erfassung der Position und/oder Geschwindigkeit des Mobilteils in Schienenrichtung aufweist.

Von Vorteil ist dabei, dass aus der erfassten Größe der Istwert für die Geschwindigkeit und/oder Position des Mobilteils bestimmbar ist.

Die Erfindung wird nun anhand von Abbildungen näher erläutert:
Das erfindungsgemäße System weist ein schienengeführtes Mobilteil auf. Dabei ist die Schienenführung mittels Rollen oder Rädern ausgeführt, welche keinen Antrieb benötigen.

Das Mobilteil weist einen Antrieb auf. Hierzu ist zumindest eine von zumindest einem Elektromotor angetriebene Scheibe vorgesehen, welche an ihrem Umfang Dauermagnete aufweist, Dabei sind die Dauermagnete in Umfangsrichtung regelmäßig voneinander beabstandet und in Umfangsrichtung nächstbenachbarte Dauermagnete weisen eine im Wesentlichen zueinander entgegengesetzte Magnetisierungsrichtung auf.

Entlang der Schiene des Systems ist ein metallisch ausgeführtes Reaktionsteil angeordnet. Da die drehende Scheibe, also Polradscheibe, in einem geringen Abstand, beispielsweise zwischen 1 und 10 mm, entlang des Reaktionsteils geführt wird, werden von den Dauermagneten im Reaktionsteil Wirbelströme erzeugt, die zu einer auf das Mobilteil wirkenden Antriebskraft führen. Das Reaktionsteil ist beispielsweise als in Schienenrichtung sich erstreckende Platte ausbildbar.

Vorzugsweise werden die Elektromotoren als Getriebemotoren ausgeführt, so dass die Drehzahl der Scheibe größer ist als die Drehzahl des antreibenden Rotors des Elektromotors. Zur Drehzahlsteuerung der Elektromotoren werden diese aus einem jeweiligen Umrichter gespeist.

Zur Positionierung des Mobilteils ist eine Positioniersteuerung vorgesehen. Diese ist entweder in die Steuerelektronik eines der Umrichter integriert angeordnet oder sie ist in einem separaten Steuerungsteil angeordnet.

Das Mobilteil weist auch ein Hubwerk auf, mit welchem das Transportgut anhebbar oder absenkbar ist. Da das Transportgut aufgenommen sein kann oder das Mobileteil eine Leerfahrt durchführen kann, ist die Gesamt-Masse des Mobilteils während des gesamten Betriebs nicht konstant.

Vorzugsweise ist das Mobilteil kontaktlos, also berührungslos, versorgt mit Energie und Information. Hierzu ist entlang der Schiene ein langgestreckter Primärleiter verlegt, in den ein Wechselstrom mit einer Mittelfrequenz, insbesondere zwischen 10 und 1000 kHz eingeprägt wird. Das Mobilteil weist eine Sekundärwicklung auf, welche induktiv an den Primärleiter gekoppelt ist und der eine Kapazität in Reihe oder parallel zugeschaltet ist, so dass die zugehörige Resonanzfrequenz im Wesentlichen der Frequenz des eingeprägten Stromes entspricht. Ebenso sind höher frequent aufmodulierte Stromanteile einspeisbar in den Primärleiter und/oder in die Sekundärwicklung, so dass über die induktive Kopplung auch Information übertragbar ist. Alternativ ist auch eine Funkübertragung ausführbar.

Das aufgenommene Transportgut kann unterschiedliche Masse haben.

Die erfindungsgemäße Positioniersteuerung berücksichtigt dies zur Erlangung besseren Regeleingenschaften, insbesondere zur Erlangung einer höheren Dynamik bei der Regelung und einer verbesserten Regelgüte.

In der Figur 1 ist die Positionierregelung näher dargestellt, wobei ein Sensor zur Erfassung der Istposition des Mobilteils vorgesehen ist.

In der Figur 2 ist die Positionierregelung näher dargestellt, wobei ein Sensor zur Erfassung der Ist-Geschwindigkeit des Mobilteils vorgesehen ist.

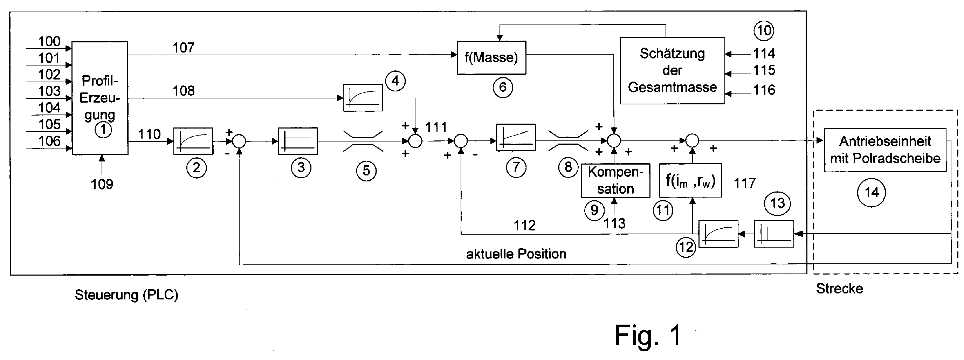

Wie in Figur 1 gezeigt, ist dabei einerseits eine Betriebsart als Positionsregler und alternativ als Geschwindigkeitsregler auswählbar. Die ausgewählte Betriebsart und der maximal, zulässige Ruck bei der vom Profilgenerator zu bestimmenden Sollbahnkurve sind dem Profilgenerator 1 ebenso zuführbar wie auch maximale Beschleunigung, maximale Verzögerung, minimale Geschwindigkeit, maximale Geschwindigkeit, Zielposition und eine bevorzugt erwünschte Sollgeschwindigkeit. Hieraus wird ein zeitabhängiger Sollpositionsverlauf, insbesondere bei der Betriebsart Positionsregler, bestimmt.

Im Profilgenerator 1 wird zu diesem zeitabhängigen Sollpositionsverlauf auch ein zeitabhängiger Sollgeschwindigkeitsverlauf und ein zeitabhängiger Sollbeschleunigungsverlauf bestimmt, wobei die beiden letztgenannten Verläufe zur Vorsteuerung verwendet werden.

Die Differenz zwischen der vorzugsweise mittels eines Filters 2, insbesondere eines Tiefpassfilters, gefilterten jeweiligen Sollposition und einer erfassten Istposition des Mobilteils in Schienenrichtung wird einem Reglerglied 3 zugeführt.

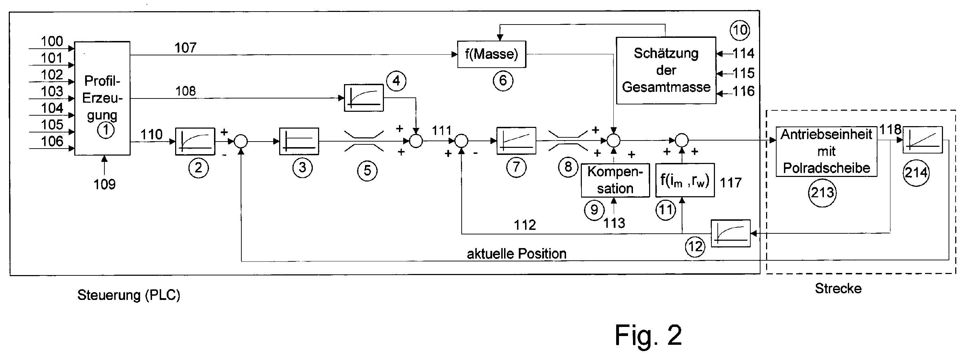

Dabei wird die Istposition des Mobilteils mit einem Sensor erfasst. Zur Erfassung der Geschwindigkeit ist die zeitliche Ableitung 13 der Istposition und anschließender Filterung mit Filter 12 verwendet. Wie in Figur 2 gezeigt, ist alternativ auch ein Geschwindigkeitssensor 118 verwendbar, wobei dann die erfasste Geschwindigkeit des Mobilteils integriert wird mittels des Integrierglieds 214 zur Bestimmung der Istposition.

Wie in Figur 1 gezeigt, ist das Reglerglied 3 vorzugsweise als lineares Reglerglied, insbesondere als P-Reglerglied, PI-Reglerglied oder PID-Reglerglied, zur Positionierregelung ausgeführt.

Das ausgangsseitige Signal des Reglerglieds 3 wird begrenzt durch ein Begrenzungsmittel 5 und zu dem begrenzten Ausgangssignal ein Vorsteuersignal addiert, welches aus dem vom Profilgenerator 1 erzeugten als Vorsteuerung verwendeten, über ein Filter 4 geführtem Soll-Geschwindigkeitsverlauf besteht. Das Filter 4 ist dabei vorzugsweise wiederum als Tiefpassfilter ausgeführt.

Die Summe aus dem Vorsteuersignal und dem Ausgangssignal wird als modifizierte SollGeschwindigkeit einem Differenzbildner zugeführt, der das erfasste und über das Filter 12 geführte Ist-Geschwindigkeits-Signal subtrahiert, wobei das Filter 12 vorzugsweise wiederum als Tiefpassfilter ausgeführt ist. Die sich ergebende Differenz wird einem Reglerglied 7 zugeführt, das vorzugsweise als lineares Reglerglied, insbesondere P-Reglerglied, PI-Reglerglied oder PID-Reglerglied, zur Geschwindigkeitsregelung ausgeführt ist.

Das ausgangsseitige Signal des Reglerglieds 7 wird wiederum über ein Begrenzungsmittel 8 geführt und dem so begrenzten Signal ein weiteres Vorsteuersignal zugeführt. Außerdem wird nicht nur das Vorsteuersignal sondern auch ein die Reibungsverhältnisse kompensierendes Signal auf das ausgangsseitige Signal addiert. Das zugehörige Kompensationsmittel 9 zum Erzeugen des kompensierenden Signals ist mit dem Bezugszeichen 9 bezeichnet.

Das Vorsteuersignal ist hierbei erzeugt aus dem vom Profilgenerator 1 erzeugten Soll-Beschleunigungsverlauf, indem aus dem Schätzmittel 10 zur Schätzung der Masse, insbesondere Massenträgheit des Mobilteils samt Transportgut, ein der geschätzten Masse entsprechendes Signal verwendet wird zur massenabhängigen Veränderung 6 des Vorsteuersignals. Vorzugsweise wird dabei das Vorsteuersignal proportional zur Masse erhöht. Auf diese Weise ist massenabhängig eine verbesserte Regeldynamik erreichbar.

Die Schätzung der Masse erfolgt in einem Bewegungsabschnitt, in welchem eine Beschleunigung oder Verzögerung des Mobilteils stattfindet. Dabei wird einerseits die Ist-Beschleunigung bestimmt und andererseits die Antriebskraft des elektrischen Antriebs, welche auf das Mobilteil wirkt. Daraus wird dann die Masse des Mobilteils abgeschätzt. Ohne Berücksichtigung von Reibung und anderen Effekten ergibt sich die Masse als Quotient aus Antriebskraft und Beschleunigung, wobei die Antriebskraft in Schienenrichtung gerichtet ist und mit dem Drehmoment des Elektromotors des elektrischen Antriebs zusammenhängt.

Das Drehzahlberechnungsmittel 11 bestimmt aus der erfassten, über das Filter 12, insbesondere Tiefpassfilter, gefilterten Ist-Geschwindigkeit des Mobilteils die zugehörige Sollgeschwindigkeit, also vom elektrischen Antrieb anzusteuernde Drehzahl der Polradscheibe. Dabei wird der effektiv wirksame Radialabstand des Reaktionsteils und die Getriebeübersetzung des elektrischen Antriebs berücksichtigt.

Nach Aufsummation des vom Drehzahlberechnungsmittel 11 erzeugten Signals wird der so bestimmte Sollgeschwindigkeitssignalwert dem Umrichter des elektrischen Antriebs zugeführt.

Der Umrichter regelt den Elektromotor des Antriebs auf die Sollgeschwindigkeit, also Solldrehzahl, hin.

Der elektrische Antrieb **14** weist ein Geschwindigkeitsbestimmungsmittel auf, mit welchem die Drehzahl des Polrads bestimmt wird oder der Umrichter ist mit einer sensorlosen Drehzahlregelung ausgeführt, wobei aus dem zeitlichen Verlauf des erfassten Motorstroms und der Motorspannung die Drehzahl abgeschätzt wird.

Des Weiteren ist ein Sensor zur Bestimmung der Position des Mobilteils oder Geschwindigkeit des Mobilteils am Mobilteil angeordnet, wobei bei Verwendung des Sensors zur Bestimmung der Position mit einem Differenzierglied 13 die erfasste Position abgeleitet und somit die Geschwindigkeit des Mobilteils bestimmt wird und mittels des nachfolgenden Filters 12 tiefpassgefiltert wird, wobei der so geglättete Wert als aktuelle Ist-Geschwindigkeit 112 dem Kaskaden-Regler zugeführt wird, insbesondere also dem Mittel 11 und dem dem Reglerglied 7 vorgeschalteten Differenzbildner. Wenn wie in Figur 2 gezeigt ein Sensors zur Bestimmung der Geschwindigkeit am Antrieb 213 verwendet wird, ist der erfasste wert über das Filter 12 leitbar und ebenso dem Kaskadenregler zuführbar. Außerdem wird gemäß Figur 2 mit einem Integrierglied 214 die erfasste Geschwindigkeit integriert und somit die Position des Mobilteils bestimmt.

Wie in Figur 1 gezeigt, erzeugt der Profilgenerator 1 aus Anfangswerten, wie Anfangsposition, Anfangsgeschwindigkeit und Anfangsbeschleunigung, und aus entsprechenden Zielwerten unter Berücksichtigung der vorgegebenen Extremwerte, insbesondere Maximalwerte beziehungsweise Minimalwerte, einen gewünschten Soll-Beschleunigungsverlauf, einen gewünschten Soll-Geschwindigkeitsverlauf und einen gewünschten Soll-Positionsverlauf.

Somit ist der Soll-Geschwindigkeitsverlauf und der Soll-Beschleunigungsverlauf als jeweiliges Vorsteuersignal verwendbar. Erfindungsgemäß wird aber der Vorsteuerwert für Beschleunigung modifiziert mit der geschätzten Masse des Mobilteils, insbesondere multipliziert mit einem zur Masse des Mobilteils proportional verlaufenden Funktionswert.

Für kleine Schlupfwerte gilt: Je höher der Schlupf des Polradantriebs desto höher die Antriebskraft.

Der Ausgangsgröße des Reglerglieds 7 ist eine Drehzahlgröße, also eine drehgeschwindigkeitsartige Größe, wobei die Drehzahl sich hierbei auf die Polradscheibe bezieht, welche einen Antriebskraftabhängigen Schlupf aufweist, also nicht einfach proportional zur Geschwindigkeit des Mobilteils in Schienenrichtung ist.

Die Ausgangsgröße des Reglerglieds 3 ist eine geschwindigkeitsartige Größe, welche diejenige Stellgröße darstellt, mit der eine Positionsabweichung ausgeregelt wird.

Am Ausgang des Filters 4 ist ein der Sollgeschwindigkeit des Mobilteils entsprechender Wert vorhanden.

Aus der Bestimmung des Schlupfes, also der Differenzdrehzahl zwischen der Drehzahl der Polradscheiben und der Synchrondrehzahl, also derjenigen Drehzahl, der ein schlupffreies Abrollen der Polräder an der Schiene zugeordnet wäre, lassen sich auch gefährliche Zustände detektieren, wie beispielsweise ein Blockieren des Mobilteils, und daraus eine Aktion, wie das Weitermelden einer Warninformation oder das Abschalten des Antriebs erzeugen. Die Synchrondrehzahl wird dabei aus der erfassten Geschwindigkeit des Mobilteils in Schienenrichtung unter Berücksichtigung des effektiv wirksamen Radius der Polradscheibe und unter Berücksichtigung der Übersetzung eines eventuell vorhandenen Getriebes bestimmt.

Durch Drehen der Polradscheiben in entsprechender Richtung ist eine große Bremskraft erzielbar.

### Bezugszeichenliste

1 Profilgenerator
2 Filter
3 Reglerglied, insbesondere P-Reglerglied, PI-Reglerglied oder PID-Reglerglied, zur Positionierregelung
4 Filter
5 Begrenzungsmittel
6 Masse
7 Reglerglied, insbesondere P-Reglerglied, PI-Reglerglied oder PID-Reglerglied, zur Geschwindigkeitsregelung
8 Begrenzungsmittel
9 Kompensationsmittel
10 Schätzmittel zur Schätzung der Masse, insbesondere Massenträgheit des Mobilteils
11 Drehzahlberechnungsmittel
12 Filter
13 Differenzierglied zur Ableitung der Position, insbesondere zur Bestimmung der Geschwindigkeit
14 elektrischer Antrieb mit Polradscheibe
100 Ruck
101 maximal erlaubte Beschleunigung
102 maximal erlaubte Verzögerung
103 maximal erlaubte Geschwindigkeit
104 minimale Geschwindigkeit
105 Zielposition
106 Sollgeschwindigkeit
107 Beschleunigungsvorsteuerung
108 Geschwindigkeitsvorsteuerung
109 Betriebsart (Geschwindigkeitsregelung oder Positionsregelung)
110 Position
111 Sollgeschwindigkeit
112 aktuelle Geschwindigkeit
113 Reibung
114 aktuelle Geschwindigkeit
115 aktueller Motorstrom des Antriebs
116 Reibung
117 Getriebeübersetzung im und Radius r_{w}
118 aktuelle Geschwindigkeit

## Patentansprüche

1. Verfahren zur Positionierung eines schienengeführten Mobilteils wobei das Mobilteil eine von einem drehzahlgeregelten Antrieb (14) direkt oder über ein Getriebe angetriebene Polradscheibe aufweist, wobei die Polradscheibe in Umfangsrichtung abwechselnd magnetisierte Dauermagnete aufweist, wobei die Polradscheibe an einem sich in Schienenrichtung erstreckenden Reaktionsteil Wirbelströme erzeugt zur Erzeugung von Antriebskraft in Schienenrichtung für das Mobilteil,
**dadurch gekennzeichnet, dass**
die Masse (6) des Mobilteils geschätzt oder bestimmt wird,
wobei, vor Beginn des Positionierungsablaufes von einem Profilgenerator (1) ein Sollbeschleunigungsverlauf bestimmt wird,
wobei ein Vorsteuersignal als Funktion des Sollbeschleunigungsverlaufs und der Masse (6) bestimmt wird, und wobei das Vorsteuersignal über einen Vorsteuerzweig einem Stellwertesignal eines ersten Reglerglieds (7) aufsummiert wird, so dass eine Solldrehzahl dem Antriebsregler bereitgestellt wird.

2. Verfahren nach Anspruch 1,
**dadurch gekennzeichnet, dass**
dem Reglerglied (7) die Differenz aus einer Sollgeschwindigkeit (106, 111) und einer Ist-Geschwindigkeit in Schienenrichtung des Mobilteils zugeführt wird.

3. Verfahren nach mindestens einem der vorangegangenen Ansprüche,
**dadurch gekennzeichnet, dass**
zusätzlich zum Vorsteuersignal dem Stellwertsignal auch ein Ausgangssignal eines Kompensationsmittels (9) zugeführt wird.

4. Verfahren nach mindestens einem der vorangegangenen Ansprüche,
**dadurch gekennzeichnet, dass**
die Funktion ein Produkt aus einem der bestimmten Masse (6) entsprechenden Wert und dem jeweiligen Sollbeschleunigungswertes ist.

5. Verfahren nach mindestens einem der vorangegangenen Ansprüche,
**dadurch gekennzeichnet, dass**
die Masse (6) bestimmt wird aus dem zeitlichen Verlauf der Geschwindigkeit (112, 114) des Mobilteils und dem zeitlichen Verlauf des Wertes einer für die Antriebskraft repräsentativen physikalischen Größe.

6. Verfahren nach Anspruch 5,
**dadurch gekennzeichnet, dass**
die Reibung (113, 116) mitberücksichtigt wird, indem ein konstanter Betrag und/oder ein geschwindigkeitsabhängiger Betrag vom Wert der physikalischen Größe subtrahiert wird und das Ergebnis zur Massenbestimmung verwendet wird,
indem aus dem Geschwindigkeitsverlauf die Beschleunigung (101) bestimmt wird und als Masse (6) das Verhältnis aus dem Wert der physikalischen Größe und der Beschleunigung (101) gebildet wird.

7. Verfahren nach mindestens einem der vorangegangenen Ansprüche,
**dadurch gekennzeichnet, dass**
von dem Profilgenerator (1) ein Sollpositionsverlauf und/oder ein Sollgeschwindigkeitsverlauf bestimmt wird
wobei der Sollpositionsverlauf von einer Anfangsposition zu einer Zielposition (105) verläuft und der Verlauf der Geschwindigkeit (112, 114) von einer Anfangsgeschwindigkeit bei der Anfangsposition zu einer Zielgeschwindigkeit bei der Zielposition (105) sowie der Verlauf der Beschleunigung (101) von einer Anfangsbeschleunigung bei der Anfangsposition zu einer Zielbeschleunigung bei der Zielposition (105),

8. Verfahren nach mindestens einem der vorangegangenen Ansprüche,
**dadurch gekennzeichnet, dass**
der vom Profilgenerator (1) erzeugte Geschwindigkeitsverlauf als Vorsteuersignal verwendet wird.

9. Verfahren nach Anspruch 8,
**dadurch gekennzeichnet, dass**
das Vorsteuersignal dem Ausgangssignal eines weiteren Reglerglieds (3) aufsummiert wird, an dessen Eingang die Differenz aus Sollposition und bestimmter Istposition zugeführt wird.

10. Verfahren nach mindestens einem der vorangegangenen Ansprüche,
**dadurch gekennzeichnet, dass**
die Differenz aus Sollgeschwindigkeit (106, 111), also aus der Summe aus dem Ausgangssignal und dem zugehörigen Vorsteuersignal des weiteren Reglerglieds (3), und der erfassten, gefilterten, Ist-Geschwindigkeit dem ersten Reglerglied (7) zugeführt wird.

11. Verfahren nach Anspruch 10,
**dadurch gekennzeichnet, dass**
dem Ausgangssignal des ersten Reglerglieds (7) nicht nur das zugehhörige Vorsteuersignal zur Berücksichtigung der Masse (6) aufsummiert wird sondern auch ein Wert zur Berücksichtigung der Reibung (113, 116) und ein Wert zur Berücksichtigung eines das Polrad antreibenden Getriebes und/oder zur Berücksichtigung des effektiv wirksamen Radius der Polradscheibe.

12. Verfahren nach mindestens einem der vorangegangenen Ansprüche,
**dadurch gekennzeichnet, dass**
das Reglerglied (3, 7) jeweils als lineares Reglerglied, insbesondere P-Reglerglied, PI-Reglerglied oder PID-Reglerglieds, ausgeführt wird.

13. Verfahren nach Anspruch 12,
**dadurch gekennzeichnet, dass**
am Reglerglied (3, 7) ausgangsseitig ein Begrenzerglied vorgesehen ist.

14. Verfahren nach mindestens einem der vorangegangenen Ansprüche,
**dadurch gekennzeichnet, dass**
der Schlupf, also die Differenzdrehzahl der Polradscheiben zur Synchrondrehzahl, bestimmt wird und bei Überschreiten eines kritischen Wertes eine Aktion ausgelöst wird.

15. Vorrichtung worin das Verfahren nach mindestens einem der vorangegangenen Ansprüche durchgeführt wird,
**dadurch gekennzeichnet, dass**
die Vorrichtung einen Sensor zur Erfassung der Position (110) und/oder Geschwindigkeit (112, 114) des Mobilteils in Schienenrichtung aufweist.

## Claims

1. Method for positioning a rail-guided mobile part,
wherein the mobile part comprises a magnet wheel disc (14) driven by a rotational-speed-controlled drive directly or via a gearing,
wherein the magnet wheel disc comprises alternately magnetised permanent magnets in the circumferential direction, wherein, in order to generate driving force in the rail direction for the mobile part, the magnet wheel disc generates eddy currents on a reaction part extending in the rail direction, **characterised in that**
the mass (6) of the mobile part is estimated or determined, wherein a desired acceleration profile is determined by a profile generator (1) before the start of the positioning sequence,
wherein a precontrol signal is determined as a function of the desired acceleration profile and the mass (6),
and wherein the precontrol signal via a precontrol branch is added to a control value signal of a first controller element (7), so that a desired rotational speed is provided to the drive controller.

2. Method according to Claim 1,
**characterised in that**
the difference between a desired speed (106, 111) and an actual speed in the rail direction of the mobile part is supplied to the controller element (7).

3. Method according to at least one of the preceding claims,
**characterised in that,**
in addition to the precontrol signal, an output signal of a compensation means (9) is also supplied to the control value signal.

4. Method according to at least one of the preceding claims,
**characterised in that**
the function is a product of a value corresponding to the determined mass (6) and the respective desired acceleration value.

5. Method according to at least one of the preceding claims,
**characterised in that**
the mass (6) is determined from the time profile of the speed (112, 114) of the mobile part and the time profile of the value of a physical quantity representative of the driving force.

6. Method according to Claim 5,
**characterised in that**
the friction (113, 116) is also taken into account by subtracting a constant amount and/or a speed-dependent amount from the value of the physical quantity and using the result for the mass determination,
by determining the acceleration (101) from the speed profile and obtaining as mass (6) the ratio of the value of the physical quantity and the acceleration (101).

7. Method according to at least one of the preceding claims,
**characterised in that**
a desired position profile and/or a desired speed profile is determined by the profile generator (1),
wherein the desired position profile runs from an initial position to a target position (105) and the profile of the speed (112, 114) runs from an initial speed at the initial position to a target speed at the target position (105) and the profile of the acceleration (101) runs from an initial acceleration at the initial position to a target acceleration at the target position (105).

8. Method according to at least one of the preceding claims,
**characterised in that**
the speed profile generated by the profile generator (1) is used as a precontrol signal.

9. Method according to Claim 8,
**characterised in that**
the pilot control signal is added to the output signal of a further controller element (3), at the input of which the difference between desired position and determined actual position is supplied.

10. Method according to at least one of the preceding claims,
**characterised in that**
the difference between desired speed (106, 111), i.e. the sum of the output signal and the associated precontrol signal of the further controller element (3), and the detected, filtered, actual speed is supplied to the first controller element (7).

11. Method according to Claim 10,
**characterised in that**
to the output signal of the first controller element (7) is added not only the associated precontrol signal for taking account of the mass (6), but also a value for taking account of the friction (113, 116) and a value for taking account of a gearing driving the magnet wheel and/or for taking account of the effectively acting radius of the magnet wheel disc.

12. Method according to at least one of the preceding claims,
**characterised in that**
the controller element (3, 7) is respectively configured as a linear controller element, in particular P controller element, PI controller element or PID controller element.

13. Method according to Claim 12,
**characterised in that**
a limiter element is provided on the controller element (3, 7) on the output side.

14. Method according to at least one of the preceding claims,
**characterised in that**
the slip, i.e. the differential rotational speed of the magnet wheel discs as opposed to the synchronous rotational speed, is determined and an action is triggered when a critical value is exceeded.

15. Device wherein the method according to at least one of the preceding claims is carried out,
**characterised in that**
the device comprises a sensor for detecting the position (110) and/or speed (112, 114) of the mobile part in the rail direction.

## Revendications

1. Procédé de positionnement d'un élément mobile guidé sur rails, sachant que l'élément mobile présente un disque de roue polaire entraîné directement ou par l'intermédiaire d'une transmission par un entraînement (14) à régime régulé, sachant que le disque de roue polaire présente des aimants permanents magnétisés en alternance en direction périphérique, sachant que le disque de roue polaire produit des courants de Foucault sur un organe de réaction s'étendant dans la direction des rails, afin de produire pour l'élément mobile une force d'entraînement dans la direction des rails, **caractérisé en ce qu'**on évalue ou on détermine la masse (6) de l'élément mobile, sachant qu'avant le début du déroulement du positionnement, un générateur de profil (1) détermine une courbe d'accélération nominale,
sachant qu'on détermine un signal pilote comme fonction de la courbe d'accélération nominale et de la masse (6),
et sachant qu'on additionne le signal pilote, par l'intermédiaire d'une ligne pilote, à un signal de valeur de réglage d'un premier élément régulateur (7), de manière à fournir un régime nominal au régulateur d'entraînement.

2. Procédé selon la revendication 1, **caractérisé en ce qu'**on apporte à l'élément régulateur (7) la différence d'une vitesse nominale (106, 111) et d'une vitesse réelle dans la direction des rails de l'élément mobile.

3. Procédé selon au moins une des revendications précédentes, **caractérisé en ce qu'**on apporte au signal de valeur de réglage, en plus du signal pilote, également un signal de sortie d'un moyen de compensation (9).

4. Procédé selon au moins une des revendications précédentes, **caractérisé en ce que** la fonction est un produit d'une valeur correspondant à la masse déterminée (6) et de la valeur respective d'accélération nominale.

5. Procédé selon au moins une des revendications précédentes, **caractérisé en ce qu'**on détermine la masse (6) à partir de la courbe temporelle de la vitesse (112, 114) de l'élément mobile et de la courbe temporelle de la valeur d'une grandeur physique représentative de la force d'entraînement.

6. Procédé selon la revendication 5, **caractérisé en ce qu'**on prend également en compte le frottement (113, 116), par le fait qu'on soustrait de la valeur de la grandeur physique un montant constant et/ou un montant fonction de la vitesse, et qu'on utilise le résultat pour déterminer la masse,
par le fait qu'on détermine l'accélération (101) à partir de la courbe de vitesse, et qu'on forme comme masse (6) le rapport de la valeur de la grandeur physique et de l'accélération (101).

7. Procédé selon au moins une des revendications précédentes, **caractérisé en ce que** le générateur de profil (1) détermine une courbe de position nominale et/ou une courbe de vitesse nominale,
sachant que la courbe de position nominale s'étend d'une position initiale jusqu'à une position cible (105),
que la courbe de la vitesse (112, 114) s'étend d'une vitesse initiale à la position initiale jusqu'à une vitesse cible à la position cible (105), et que la courbe de l'accélération (101) s'étend d'une accélération initiale à la position initiale jusqu'à une accélération cible à la position cible (105).

8. Procédé selon au moins une des revendications précédentes, **caractérisé en ce qu'**on utilise comme signal pilote la courbe de vitesse générée par le générateur de profil (1).

9. Procédé selon la revendication 8, **caractérisé en ce qu'**on additionne au signal pilote le signal de sortie d'un autre élément régulateur (3), à l'entrée duquel est apportée la différence de la position nominale et de la position réelle déterminée.

10. Procédé selon au moins une des revendications précédentes, **caractérisé en ce qu'**on apporte au premier élément régulateur (7) la différence de la vitesse nominale (106, 111), donc de la somme du signal de sortie et du signal pilote associé de l'autre élément régulateur (3), et de la vitesse réelle détectée et filtrée.

11. Procédé selon la revendication 10, **caractérisé en ce qu'**on additionne au signal de sortie du premier élément régulateur (7) non seulement le signal pilote associé pour prendre en compte la masse (6), mais aussi une valeur pour prendre en compte le frottement (113, 116) et une valeur pour prendre en compte une transmission entraînant la roue polaire et/ou pour prendre en compte le rayon effectivement actif du disque de roue polaire.

12. Procédé selon au moins une des revendications précédentes, **caractérisé en ce que** l'élément régulateur (3, 7) est respectivement réalisé sous forme d'élément régulateur linéaire, en particulier un élément régulateur P, un élément régulateur PI ou un élément régulateur PID.

13. Procédé selon la revendication 12, **caractérisé en ce qu'**un élément limiteur est prévu du côté de sortie sur l'élément régulateur (3, 7).

14. Procédé selon au moins une des revendications précédentes, **caractérisé en ce qu'**on détermine le glissement, donc le régime différentiel des disques de roues polaires par rapport au régime synchrone, et on déclenche une action en cas de dépassement d'une valeur critique.

15. Dispositif dans lequel est mis en oeuvre le procédé selon au moins une des revendications précédentes,
**caractérisé en ce que** le dispositif présente un capteur pour détecter la position (110) et/ou la vitesse (112, 114) de l'élément mobile dans la direction des rails.
